# EUROPEAN PATENT APPLICATION

(11) **EP 4 733 224 A1**
(43) Date of publication of application: **29.04.2026**
(21) Application number: 24208224.6
(22) Date of filing: 22.10.2024
(51) Int. Cl.: B65G 1/04, B65G 1/02

(54) **A BRACKET**

(71) Applicant: AutoStore Technology AS, 5578 Nedre Vats (NO)
(72) Inventor: Austrheim, Trond, 5578 Nedre Vats (NO); Aarseth, Simen, 5578 Nedre Vats (NO)
(74) Representative: Kilburn & Strode LLP

(57) **Abstract**

The disclosure relates to a bracket (500) affixable to an upper end of a vertical frame member (10) of a storage grid (116), the bracket (500) comprising an elongate arm (506) configured to provide a rail section (508) for a container-handling vehicle. A vertical frame member (104, 800) which maybe used to define an edge of a storage grid is also described.

## Description

### TECHNICAL FIELD

The disclosure relates to a bracket. More particularly, it relates to a bracket for extending a rail system of a storage grid. A vertical frame member having a laterally extending arm configured to provide a rail section is also described.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Some storage and retrieval systems comprise fencing about the edge of the grid, and about the edge of the rail system, to enclose the robotic container-handling vehicles and ensure that they are not able to fall off the edge of the rail system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a bracket that is an example of the present invention;
Fig. 6 shows a perspective view of a storage system comprising a grid and a plurality of brackets according to an example of the present invention;
Fig. 7 is another view of the storage system of Fig. 6; and
Fig. 8 is a schematic drawing of a vertical frame member that is an example of the present invention.

### DETAILED DESCRIPTION

In overview, the disclosure relates to means for extending a rail system or network at the top of a storage grid. Such means allows a portion of the rail system to overhang the edge of the storage grid to ensure that container-handling vehicles can access all storage columns, including those at the edge of the storage grid. In one example, the present invention provides a bracket affixable to an upper end of a vertical frame member of a storage grid, the bracket comprising an elongate arm configured to provide a rail section for a container-handling vehicle. In use, the bracket is fitted to an upper end of a vertical frame member, and the elongate arm provides an extension to the rail system which overhangs the edge of the storage grid. In another example, the present invention provides a vertical frame member having laterally extending arm towards its upper end (for example, a bracket and a vertical frame member may be provided as a unitary element) to provide the rail section for overhanging an edge of the storage grid to extend the rail system. In certain examples, the bracket and/or the vertical frame member may also comprise means for engaging a fencing post and/or a fencing panel to provide a grid fence about the perimeter of the rail system of the storage grid, wherein the grid fence is spaced away from the edge of the storage grid.

### Automated storage and retrieval system overview

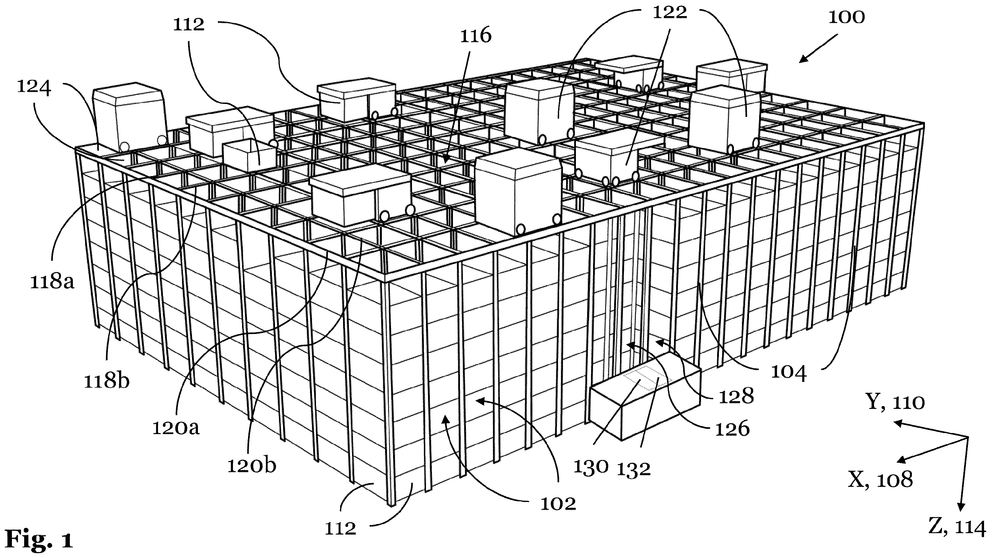

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

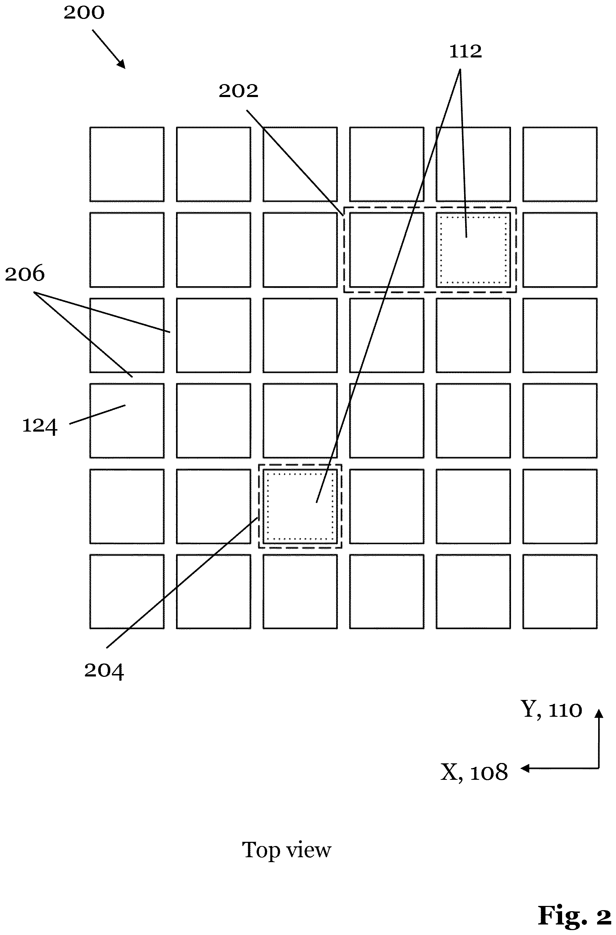

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

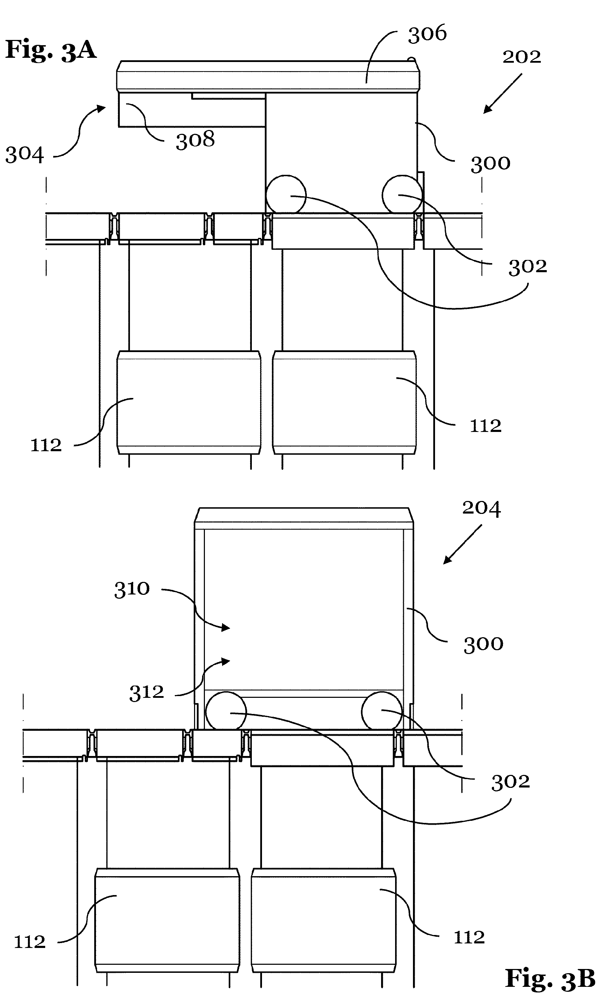

A first, 'cantilever' type of robot 202 is shown in more detail in Fig. 3A and includes a body 300, a set of wheels 302 and a lifting device 304. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

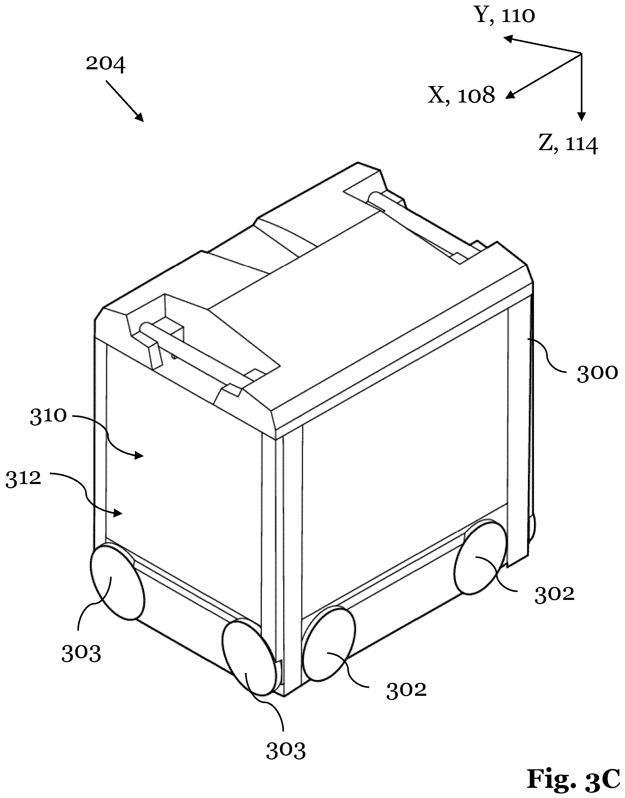

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

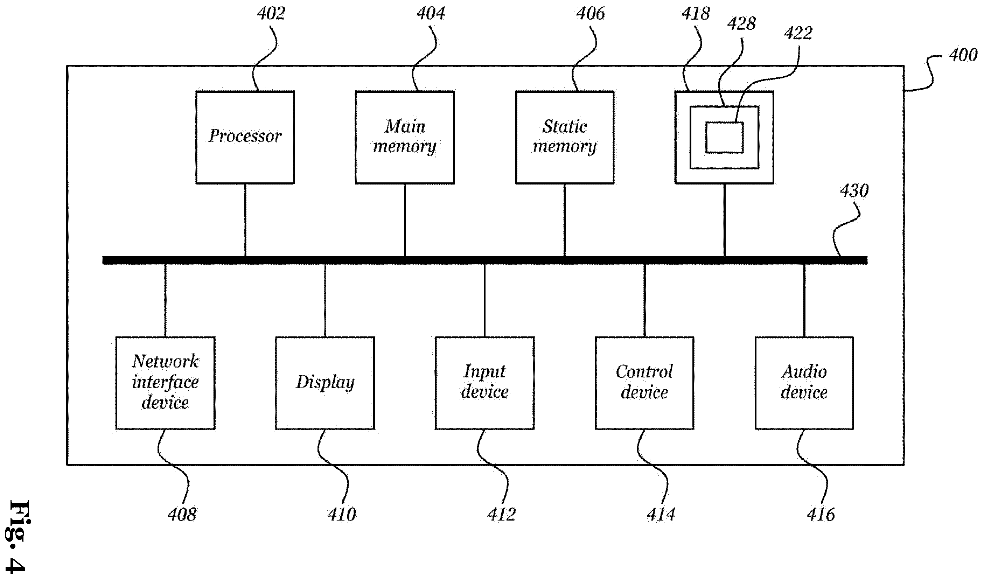

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Rail System Extension

In some examples, storage grids such as those described above with respect to Fig. 1 comprise a grid fence about the perimeter of the rail system in order to ensure that robotic container-handling vehicles are enclosed and are not able to fall off the edge of the rail system. The grid fence may also encircle structural columns or other features of the warehouse in which the storage grid is located.

In some automated storage and retrieval systems container-handling vehicles may be larger than access openings and storage columns of the grid (e.g., when they are positioned above an access opening, such as access opening 124, part of the vehicle may occlude an adjacent opening). In order to ensure that container-handling vehicles are able to access all storage columns from any direction, the present invention provides a new means for extending the rail system at the top of the storage grid. In addition, in certain embodiments, these means may also space grid fencing away from the edge of the storage grid.

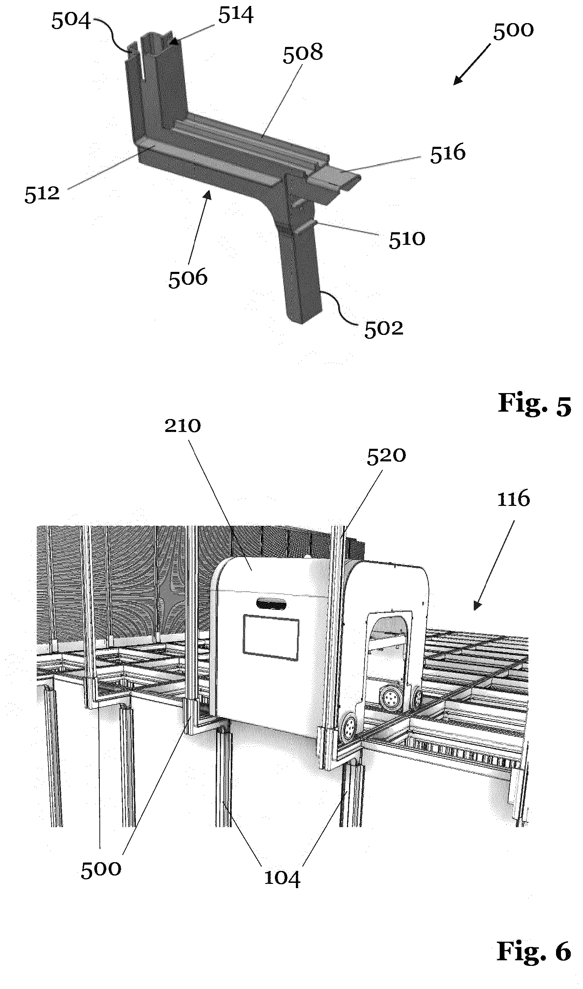

Fig. 5 shows a bracket 500 that is an example of the present invention. The bracket 500 provides an additional grid element which may be used to extend the rail system of the grid, as described below, to ensure that container-handling vehicles are able to access all storage columns of the grid.

In this example, the bracket 500 comprises a z-shaped body having a mounting arm 502 (which may also be referred to herein as a first arm) configured to engage an upper end of a vertical frame member (e.g., vertical frame member 104), a fencing arm 504 (which may also be referred to herein as a second arm) configured to engage a fencing panel, and an elongate arm 506 (which may also be referred to herein as a elongate intermediate element) linking the mounting arm 502 and the fencing arm 504. The bracket 500 may be fabricated of any appropriate material, for example aluminium.

In this example, the mounting arm 502 is configured to engage an upper end of a vertical frame member by being sized and shaped to be received within the upper end of a vertical frame member, with an outwardly extending rim 510 which is arranged to abut an upper surface of the vertical frame member when the bracket 500 is received therein. However, it will be appreciated that the mounting arm 502 may have any suitable engagement with a vertical frame member. For example, the mounting arm 502 may fit over the upper end of a vertical frame member, or the mounting arm 502 may be bolted, or otherwise secured, to the upper end of the vertical frame member. In other examples, a mounting arm may not be provided, and the bracket may be secured to a vertical frame member by any suitable alternative means.

In this example, the fencing arm 504 is configured to engage a fencing panel by having an upwardly facing opening 514 into which a fencing panel may be directly received, or which may receive a fencing post for securing a fencing panel. However, it will be appreciated that in other examples the fencing post may be configured to any suitable manner to engage, receive, and/or support a fencing panel. In certain arrangements of a storage system a fence may not be required (e.g., due to space constraints within a particular warehouse) and so a bracket may be provided without a fencing arm.

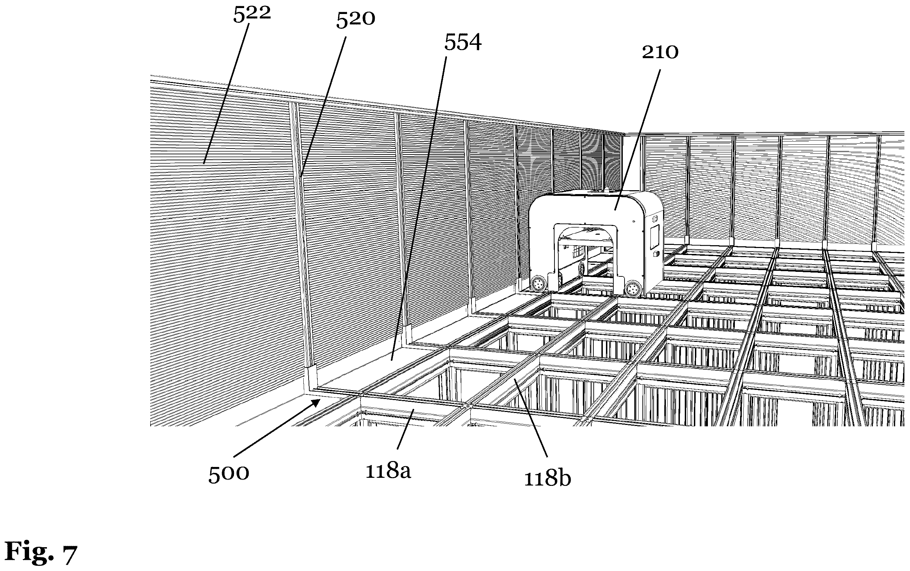

The bracket 500 comprises a lip 512 which extends laterally from a side face thereof. In particular, the lip 512 extends laterally from side faces of the fencing arm 504 and the elongate arm 506. A vertical portion of this lip 512 extends from the second arm 504, such that the fencing arm 504 is configured to engage a fencing panel via the lip 512 which abuts the fencing panel and help prevent movement of the fencing panel in use. The horizontal portion of the lip 512 (i.e., the portion extending from the intermediate portion 506) is configured to support a base panel or flooring panel in the overhanging section of the storage grid (e.g., as shown in Fig. 7), and may also support a lower end of a fencing panel in use. In certain arrangements of a storage system a fence and/or flooring panels may not be required, and so a bracket may be provided without this lip 512.

The elongate arm 506 comprises a rail section 508 which in this example comprises two parallel grooves extending along the length of the intermediate portion 506, each groove being configured to receive a wheel of a container-handling vehicle. By being provided with a rail section 508, the elongate arm 506 extends the rail system to provide an overhang from the edge of the storage grid. A container-handling vehicle is therefore able to run onto the bracket 500 when accessing storage columns which are situated at the edge of the storage grid. In other examples, other configurations rail section 508 may be selected (e.g., to correspond with the shape and/or profile of wheels of the container-handling vehicles). For example, the rail section 508 may comprise one or more ridges or other shapes. The rail section 508 can be any appropriate type for permitting travel of robots thereon, including groove-type rails for receiving vehicle wheels, or protrusion-type rails for engaging wheel recesses. The rail section 508 may comprise a single track or multiple parallel tracks, and its specific design will depend on the exact features of the robots that will transit over it..

An engagement portion 516 protrudes from the elongate arm 506 for connecting the rail section 508 to the rail system of the storage grid. For example, the engagement portion 516 may be received within a corresponding recess, groove, or aperture of a grid element. It will be appreciated that, in other examples, the bracket 500 may itself comprise a recess, groove, or aperture defining a female engagement portion for receiving a similar protrusion from a grid element of the grid. By fitting with the rail system in this way, the engagement portion 516 also provides further structural support for the bracket 500 on the storage grid.

Figs. 6 and 7 show views of a storage system comprising a grid and a plurality of brackets 500 according to an example of the present invention. The grid is substantially the same as grid 100 described above with respect to Fig. 1, and is formed by a plurality of generally rectilinear, adjacent vertical columns formed between vertical frame members 104 and extending in the X and Y directions, having a rail system 116 formed thereon.

However, in this example the grid further comprises a plurality of brackets 500 as described above with respect to Fig. 5, wherein each bracket 500 is connected at an upper end of a respective vertical frame member 104 positioned at an edge of the grid. In particular, a mounting arm 502 of each bracket 500 is received within the upper end of the vertical frame member 104. A fencing post 520 is received within the upper end of the fencing arm 504 of each bracket 500, such that the fencing post 520 extends vertically above the rail system 116 but is spaced away from the periphery of the storage grid due to the length of the elongate arm 506. As shown in Fig. 7, fencing panels 522 extend between adjacent fencing posts 520, engaged by the lip 512 of the brackets 500, forming a barrier which prevents the container-handling vehicle from falling from the grid. The brackets 500 extend the rail system 116, by providing extensions to the vehicle rails 118a, 118b at the edge of the grid.

To cover areas between adjacent brackets 500, the grid additionally comprises flooring panels 554 which are supported between adjacent brackets on the lip 512. The flooring panels 554 may ensure objects do not fall from the top level of the storage grid, for example.

The elongate arm 506 has a length which is less than a width of a storage column or access opening of the grid. For example, where the width of a storage column is 505 mm, the elongate arm 506 has a length of less than 505 mm. Such an arrangement ensures that the bracket 500 provides sufficient extension of the rail system to allow a container-handling vehicle to access storage columns at the edge of the grid, whilst maintain sufficient rigidity and strength to support the weight of the container-handling vehicle 210. Of course, it will be appreciated that the elongate arm 506 maybe any suitable length, and that the length may be dependent upon the dimensions of the grid and in particular of the storage columns and access openings.

The vehicle 210 (which may also be referred to as a robot) shown in Figs. 6 and 7 includes a body, a set of wheels, and a lifting device. The body contains operational equipment (not shown) for the vehicle 210 including drive, power and control systems. The vehicle 210 comprises two sets of wheels, permitting movement of the vehicle 210 in the X and Y directions along the respective rails. One or both sets of wheels can be raised or lowered to permit selective engagement of the rails for movement in the desired direction. The wheels also permit movement of the vehicle 210 onto a rail section provided by the bracket 500 at the edge of the grid, as shown in Fig. 6.

The body of the vehicle 210 is in the form of an upturned U-shape, with a gripping device for engaging a bin being provided between the arms of the U-shape. As the body is provided in the form of an upturned U-shape, the robot 210 must extend entirely across an access opening (e.g., access opening 124 as described above), and partially across adjacent access openings, in order to access a storage container. By extending the rail system using the bracket 500, it can be ensured that the vehicle is able to reach storage columns and access openings at the edge of the grid. Of course, it will be appreciated that this may be applicable to any shape and/or configuration of container-handling vehicle where the body of the container-handling vehicle is larger than the dimensions of access openings and storage columns of the grid.

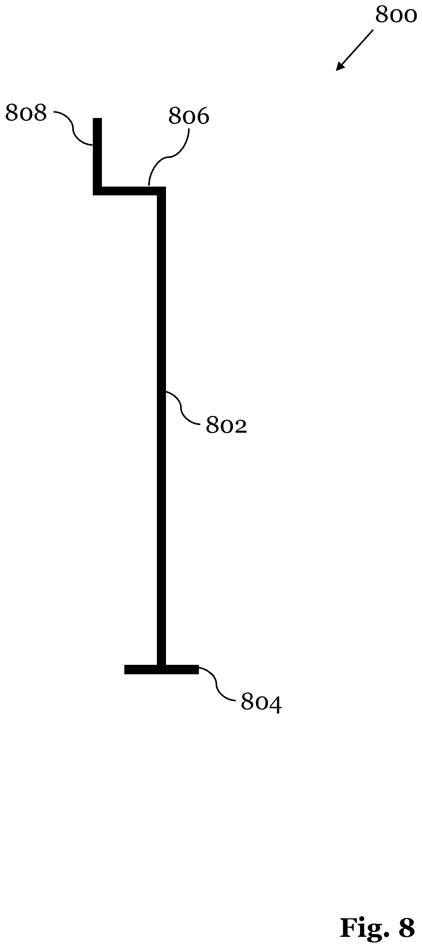

Fig. 8 is a schematic diagram of a vertical frame member 800 that is another example of the present invention. The vertical frame member 800 may be fabricated of any appropriate material, for example aluminium. The vertical frame member 800 may be used to define edges of a storage grid in order to provide a extension of the rail system at the top of the storage grid, with an overhanging edge portion which ensures that container-handling vehicles are able to access all storage columns of the grid. The vertical frame member 800 may generally be understood as a unitary component formed of a vertical frame member (e.g., such as vertical frame member 104 described above) and a bracket 500 as described above.

The vertical frame member 800 comprises an elongate main body portion 802 having a foot 804 at a lower end thereof, for supporting the vertical frame member 800 on a warehouse floor in use. Towards the top or upper end of the main body portion 802, the vertical frame member 800 comprises a laterally extending arm 806, the laterally extending arm 806 being configured to provide a rail section for a container-handling vehicle. The laterally extending arm 806 may be generally configured as the elongate arm 506 of the bracket 500 described above. That is, the laterally extending arm 806 may comprise one or more grooves and/or ridges for receiving a wheel of a container-handling vehicle such that the container-handling vehicle may operate on the rail section provided by the laterally extending arm 806 in order to access storage columns located at the edge of a storage grid.

At its uppermost end, the vertical frame member 800 comprises a fencing arm 808 for engaging a fencing post and/or a fencing panel, in substantially the same manner as the fencing arm 504 of the bracket 500 as described above. The vertical frame member 800 thereby provides a mounting point for fencing which is spaced away from the edge of a storage grid.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A bracket affixable to a storage grid, such as to an upper end of a vertical frame member of the storage grid, the bracket comprising an elongate arm configured to provide a rail section for a container-handling vehicle adapted to move onto said storage grid.

2. A bracket according to claim 1, wherein the elongate arm comprises a groove defining a track for receiving a wheel of the container-handling vehicle.

3. A bracket according to claim 1 or 2, wherein the elongate arm comprises multiple parallel tracks, each track for receiving a wheel of the container-handling vehicle.

4. A bracket according to any preceding claim, wherein the elongate arm comprises an engagement portion for connecting to a rail system of a storage grid.

5. A bracket according to any preceding claim, wherein the elongate arm has a length of less than 505 mm.

6. A bracket according to any preceding claim, further comprising a fencing arm, which is optionally provided substantially perpendicular to the elongate arm, the fencing arm configured to engage a fencing panel.

7. A bracket according to claim 5, wherein the fencing arm comprises an opening for receiving a fencing post.

8. A bracket according to claim 6 or 7, wherein the fencing arm comprises a groove or slot for receiving a fencing panel.

9. A bracket according to any preceding claim, further comprising a mounting arm substantially perpendicular to the elongate arm, the mounting arm configured to engage an upper end of a vertical frame member.

10. A bracket according to claim 9, wherein the mounting arm comprises an aperture for receiving a bolt to affix the bracket to the vertical frame member.

11. A bracket according to any preceding claim, further comprising a lip extending laterally from a side face thereof for engaging with a fencing panel and/or a flooring panel.

12. A storage grid for an automated storage and retrieval system, the storage grid comprising:
a frame formed by a plurality of generally rectilinear, adjacent vertical columns formed between vertical frame members; and
a plurality of brackets according to any one of claims 1 to 11, each bracket being connected at an upper end of a respective vertical frame member positioned at an edge of the storage grid.

13. A storage grid according to claim 12, wherein the elongate arm of each bracket has a length which is equal to or less than the distance between adjacent vertical frame members.

14. A vertical frame member for forming part of a storage grid, the vertical frame member comprising an elongate main body portion and a laterally extending arm at an end of the main body portion, the laterally extending arm configured to provide a rail section for a container-handling vehicle.

15. A storage grid for an automated storage and retrieval system, the storage grid comprising a frame formed by a plurality of generally rectilinear, adjacent vertical columns formed between vertical frame members, wherein vertical frame members defining edges of the storage grid are vertical frame members according to claim 14.
